# EUROPEAN PATENT SPECIFICATION

(11) **EP 4 357 161 B1**
(45) Date of publication and mention of the grant of the patent: **27.08.2025**
(21) Application number: 23202433.1
(22) Date of filing: 09.10.2023
(51) Int. Cl.: B60C 11/00, B60C 13/00, B60C 1/00, B60C 13/04, B60C 15/06

(54) **MOTORCYCLE TIRE**
MOTORRADREIFEN
PNEU DE MOTOCYCLETTE

(30) Priority: 20.10.2022 JP 2022168591
(43) Date of publication of application: 24.04.2024
(73) Proprietor: Sumitomo Rubber Industries, Ltd., Kobe-shi, Hyogo 651-0072 (JP)
(72) Inventor: SHIBAMOTO, Shohei, Kobe-shi, Hyogo-ken, 651-0072 (JP)
(74) Representative: Manitz Finsterwald Patent- und Rechtsanwaltspartnerschaft mbB

(56) References cited:
- EP-B1- 3 470 241
- JP-B2- 6 874 416
- US-A1- 2010 212 801
- US-A1- 2020 331 298

## Description

### RELATED APPLICATIONS

This application claims the benefit of foreign priority to Japanese Patent Applications No. JP2022-168591, filed October 20, 2022.

### FIELD OF THE INVENTION

The present invention relates to a motorcycle tire.

### BACKGROUND OF THE INVENITON

Japanese Unexamined Patent Application Publication No. 2009-1082 describes a motorcycle pneumatic tire having a pair of bead cores and a carcass extending between a pair of bead portions. This motorcycle pneumatic tire includes hard rubber layers each arranged inside the carcass and outside a respective one of the bead cores in a tire radial direction. Related technologies are also known from JP 6 874416 B2, US 2020/331298 A1, US 2010/212801 A1, and EP 3 470 241 B1.

### SUMMARY OF THE INVENTION

A motorcycle turns by tilting the body and giving a camber angle to the tires. Tires are required to have improved sense of firmness, ground contacting feel, and absorbency during such cornering. The sense of firmness has a significant relationship to tread rigidity and affects stability during running. The ground contacting feel has a great relationship with the easiness of bending of the sidewall portions, and affects the easiness of steering. Further, the absorbency has a significant relationship to the ease of bending of the tread portion and the sidewall portions, and affects the easiness of suppressing vibration during running.

The present invention was made in view of the above, and a primary object thereof is to provide a motorcycle tire having improved sense of firmness, improved ground contacting feel, and improved absorbency during cornering. The present invention is set out in the appended claims.

The present invention is a motorcycle tire comprising:
a tread portion having a pair of tread edges;
a pair of sidewall portions each extending inward in a tire radial direction from a respective one of the tread edges;
a pair of bead portions each arranged radially inside a respective one of the sidewall portions; and
a carcass extending from one bead portion to the other bead portion in a toroidal manner, wherein
each of the sidewall portions has a sidewall rubber arranged outside the carcass in a tire axial direction,
the sidewall rubber has a minimum thickness (Ds) of 50% or less of a minimum tire thickness from a respective one of the tread edges to a tire inner cavity surface, and
the minimum thickness (Ds) of the sidewall rubber is from 0.3 to 1.9 mm.

By adopting the above configuration, it is possible that the motorcycle tire of the present invention improves the sense of firmness, the ground contacting feel, and the absorbency.

### BRIEF DESCRIPTION OF THE DRAWINGS

FIG. 1 is a tire meridian section showing an embodiment of the motorcycle tire of the present invention.
FIG. 2 is an enlarged view of one of sidewall portions of FIG. 1.
FIG. 3 is an enlarged view of one of bead portions of FIG. 1.

### DETAILED DESCRIPTION OF THE INVENTION

An embodiment of the present invention will now be described below in conjunction with accompanying drawings.

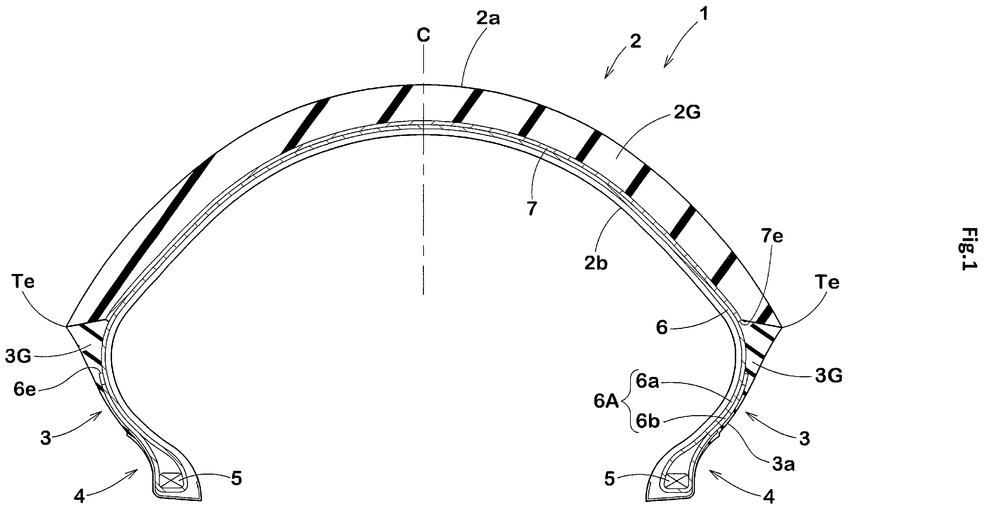

FIG. 1 is a tire meridian section passing all through the tire rotation axis (not shown) of a motorcycle tire 1 (hereinafter may be simply referred to as "tire 1") of the present embodiment in a standard state. The tire 1 of the present invention is suitably used for a tire intended for racing on a circuit, for example. However, the present invention is not limited to the tire 1 for racing.

The term "standard state" refers to a state in which the tire 1 is mounted on a standard rim (not shown), inflated to a standard inner pressure, and loaded with no tire load. In the present specification, unless otherwise noted, dimensions of various parts of the tire 1 are those measured in the standard state.

Further, the term "standard rim" refers to a wheel rim specified for the concerned tire by a standard included in a standardization system on which the tire is based, for example, the "normal wheel rim" in JATMA, "Design Rim" in TRA, and "Measuring Rim" in ETRTO.

Furthermore, the term "standard inner pressure" refers to air pressure specified for the concerned tire by a standard included in a standardization system on which the tire is based, for example, the maximum air pressure in JATMA, maximum value listed in the "TIRE LOAD LIMITS AT VARIOUS COLD INFLATION PRESSURES" table in TRA, and "INFLATION PRESSURE" in ETRTO.

As shown in FIG. 1, the tire 1 of the present embodiment includes a tread portion 2, a pair of sidewall portions 3, a pair of bead portions 4, and a carcass 6 extending toroidally from one bead portion 4 to the other bead portion 4.

The tread portion 2 has a pair of tread edges (Te), a ground contacting surface (2a) that extends between the tread edges (Te) and is designed to contact road surfaces, and a tire inner cavity surface (2b). The ground contacting surface (2a) extends in an arc shape so as to be convex outward in a tire radial direction, for example. It is possible that the tire 1 configured as such turns with a large camber angle. The tread edges (Te) are outer edges in a tire axial direction of the tire that touch the ground when the camber angle is at its maximum.

Each of the sidewall portions 3 extends radially inward from a respective one of the tread edges (Te). Each of the sidewall portions 3 has a sidewall rubber 3G disposed axially outside the carcass 6. In the present embodiment, each of the sidewall rubbers 3G forms an outer surface (3a) of a respective one of the sidewall portions 3.

Each of the bead portions 4 is located radially inside a respective one of the sidewall portions 3. In each of the bead portions 4 in the present embodiment, a bead core 5 is embedded therein.

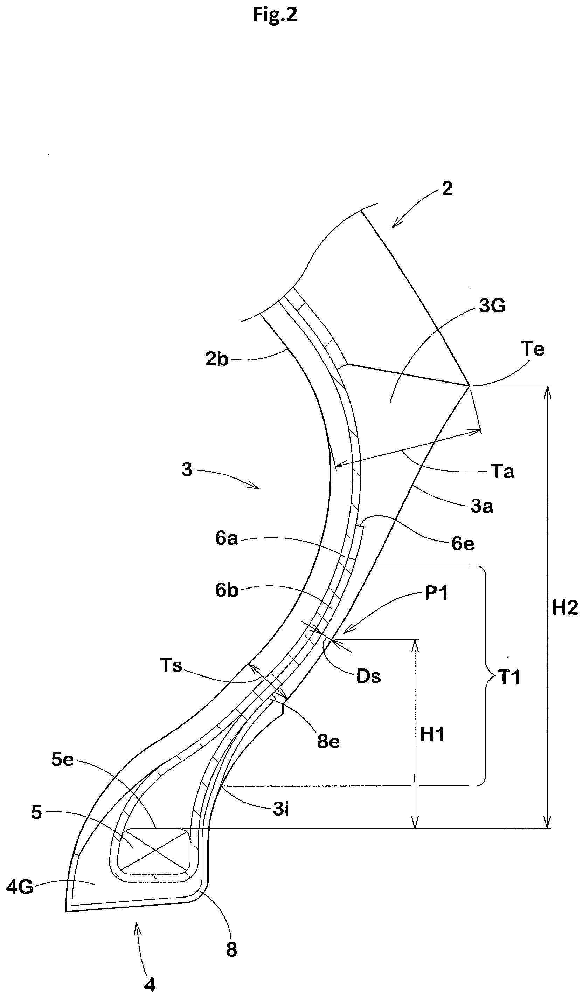

FIG. 2 is an enlarged view of one of the sidewall portions 3 on one side in the tire axial direction of the tire 1 shown in FIG. 1. As shown in FIG. 2, each pf the sidewall portions 3 has a minimum thickness (Ts). The present invention was made by focusing on the fact that the ground contacting feel and the sense of firmness can be improved by specifying the minimum thickness (Ts) of each of the sidewall portions 3 and a minimum tire thickness (Ta) from each of the tread edges (Te) to the tire inner cavity surface (2b). That is, in the present invention, the minimum thickness (Ts) of each of the sidewall portions 3 is set to 50% or less of the minimum tire thickness (Ta) from each of the tread edges (Te) to the tire inner cavity surface (2b). As a result, the sidewall portions 3 have a greater amount of deflection during cornering, thereby, the ground contacting feel is improved. Further, since the minimum tire thickness (Ta) is secured at each of the tread edges (Te), a high sense of firmness is exerted during cornering at a large camber angle. In order to effectively exert this effect, the minimum thickness (Ts) is preferably 30% or more, more preferably 35% or more and preferably 45% or less, more preferably 40% or less of the minimum tire thickness (Ta). The minimum tire thickness (Ta) in the present embodiment includes the sidewall rubber 3G and a later-described main body portion (6a) of the carcass 6, but does not include a later-described turned up portion (6b) of the carcass 6 and a later-described tread reinforcement layer 7.

Further, each of the sidewall rubbers 3G has a minimum thickness (Ds) of 0.3 mm or more and 1.9 mm or less. Since the minimum thickness (Ds) is 1.9 mm or less, the amount of deflection at each of the sidewall portions 3 is secured, therefore, the ground contacting feel is improved. Furthermore, since the minimum thickness (Ds) is 0.3 mm or more, excessive decrease in the rigidity of the sidewall portions 3 is suppressed, thereby, the absorbency during cornering is improved. In order to effectively exert such an effect, the minimum thickness (Ds) is preferably 0.5 mm or more, more preferably 0.7 mm or more and preferably 1.5 mm or less, more preferably 1.3 mm or less.

In each of the sidewall portions 3 (i.e., in each axial half of the tire 1), it is preferred that a first distance H1 in the tire radial direction from the bead core 5 to a position P1, which is the position where the sidewall rubber 3G has the minimum thickness (Ds), is 60% or less of a second distance H2 in the tire radial direction from the bead core 5 (more specifically, from an outermost end (5e) in the tire radial direction of the bead core 5) to the tread edge (Te). If the first distance H1 exceeds 60% of the second distance H2, the rigidity of the sidewall portions 3 becomes excessively small, and the minimum tire thickness (Ta) needs to be reduced, which may deteriorate the sense of firmness. In the present specification, the first distance H1 is specified by the distance in the tire radial direction from the position P1, which is the position on the outer surface (3a) of the sidewall portion 3 where the sidewall rubber 3G has the minimum thickness (Ds), to the outermost end (5e) of the bead core 5. Further, the position P1 is determined excluding a portion within 5 mm radially outward from an innermost end (3i) in the tire radial direction of the sidewall rubber 3G. The second distance H2 is specified in the present specification as the distance in the tire radial direction from the outermost end (5e) of the bead core 5 to the tread edge (Te).

It is preferred that the first distance H1 is 10% or more of the second distance H2. If the first distance H1 is less than 10% of the second distance H2, the position P1, which is the position where the sidewall rubber 3G has the minimum thickness (Ds), will be close to the bead core 5, and the amount of deflection of the sidewall portion 3 may be small. In order to deflect the sidewall portions 3 at the desired positions for the purpose of improving the ground contacting feel, the first distance H1 is more preferably 20% or more and 50% or less of the second distance H2. It should be noted that when the position P1 is formed at multiple locations, the first distance H1 from any of the positions P1 to the bead core 5 is preferably 10% or more, more preferably 20% or more and preferably 60% or less, more preferably 50% or less of the second distance H2.

A range T1 of 10% or more and 60% or less of the second distance H2 radially outward from the bead core 5 (i.e., the range T1 radially outward from the bead core 5 by 10% or more and 60% or less of the second distance H2) is a region in each of the sidewall portions 3 that greatly affects the ground contacting feel and the absorbency. Therefore, in the range T1, a difference (Dm-Ds) between a maximum thickness (Dm) (not shown) and the minimum thickness (Ds) of the sidewall rubber 3G is preferably 1.5 mm or less, and more preferably 1.0 mm or less. As a result, the deflection during cornering occurs uniformly in the range T1 in each of the sidewall portions 3, thereby, the ground contacting feel is further improved.

Further, in the range T1, the thickness of the sidewall rubber 3G is preferably 0.3 mm or more, more preferably 0.5 mm or more, and preferably 1.9 mm or less, more preferably 1.5 mm or less. Since the thickness of the sidewall rubber 3G is 0.3 mm or more, it is possible that the absorbency is maintained high during cornering. Since the thickness of the sidewall rubber 3G is 1.9 mm or less, the flexibility of the sidewall portions 3 is secured and therefore the ground contacting feel can be maintained high.

As shown in FIG. 1, the carcass 6 is formed by at least one carcass ply, one carcass ply 6A in the present embodiment. The carcass ply 6A includes the main body portion (6a) extending from one bead core 5 to the other bead core 5 and a pair of the turned up portions (6b) connected to the main body portion (6a) and each turned up around a respective one of the bead cores 5, for example. The carcass ply 6A is formed with a well-known structure. In each of the sidewall portions, the turned up portion (6b) has an outermost end (6e) in the tire radial direction located radially outside the range T1 (as shown in FIG. 2). As a result, the rigidity is uniform within the range T1, therefore, it is expected to have the effect of maintaining a high ground contacting feel.

Further, the tread portion 2 of the present embodiment includes the tread reinforcement layer 7 adjacent to the carcass 6 on the radially outer side and a tread rubber 2G adj acent to the tread reinforcement layer 7 on the radially outer side to form the ground contacting surface (2a). The tread reinforcement layer 7 is formed with a well-known structure. The tread reinforcement layer 7 in the present embodiment has outermost edges (7e) in the tire axial direction each located axially inside and radially outside a respective one of the tread edges (Te). On each side in the tire axial direction, the tread rubber 2G and the sidewall rubber 3G are divided by a line segment connecting the outermost edge (7e) of the tread reinforcement layer 7 and the tread edge (Te), for example.

The tread rubber 2G and the sidewall rubber 3G contain an anti-aging agent (antioxidant). In addition, the tread rubber 2G and the sidewall rubber 3G contain wax in the present embodiment.

Compared to the tread rubber 2G, the sidewall rubber 3G is not subject to wear due to contact with the road surface. Therefore, the sidewall rubber 3G, which forms the outer surface (3a), is required to have excellent weather resistance in order to suppress cracking and chipping caused by continuous exposure to ultraviolet rays. Therefore, the blending amount of the anti-aging agent per unit mass of the sidewall rubber 3G is greater than the blending amount of the anti-aging agent per unit mass of the tread rubber 2G. It should be noted that if the amount of the anti-aging agent per unit mass of the sidewall rubber 3G is excessively large, the sidewall rubber 3G is prone to discoloration. For this reason, a difference (Ra-Rb) between a blending amount (Ra) (not shown) of the antioxidant contained in 100 parts by mass of the rubber component of the sidewall rubber 3G and a blending amount (Rb) of the antioxidant contained in 100 parts by mass of the rubber component of the tread rubber 2G is preferably 0.3 parts by mass or more, more preferably 1.0 parts by mass or more, and preferably 2.0 parts by mass or less, more preferably 1.5 parts by mass or less.

From the same perspective, it is preferred that the blending amount of the wax per unit mass of the sidewall rubber 3G is greater than the blending amount of the wax per unit mass of the tread rubber 2G. A difference (Wa-Wb) between a blending amount (Wa) of the wax contained in 100 mass parts of the rubber component of the sidewall rubber 3G and a blending amount (Wb) of the wax contained in 100 mass parts of the rubber component of the tread rubber 2G is preferably 0.3 parts by mass or more, more preferably 1.0 parts by mass or more, and preferably 2.0 parts by mass or less, and more preferably 1.5 parts by mass or less.

Examples of the anti-aging agents are, for example, as follows: naphthylamine antioxidants such as phenyl-α-naphthylamine; diphenylamine antioxidants such as octylated diphenylamine and 4,4'-bis(α,α'-dimethylbenzyl)diphenylamine; p-Phenylenediamine antioxidants such as N-isopropyl-N'-phenyl-p-phenylenediamine, N-(1,3-dimethylbutyl)-N'-phenyl-p-phenylenediamine, N,N'-di-2-naphthyl-p-phenylenediamine; quinoline antioxidants such as polymers of 2,2,4-trimethyl-1,2-dihydroquinoline; monophenol-based antioxidants such as 2,6-di-t-butyl-4-methylphenol and styrenated phenol; bis, tris, polyphenol antioxidants such as tetrakis-[methylene-3-(3',5'-di-t-butyl-4'-hydroxyphenyl)propionate]methane; and so on. As commercially available products, products of Seiko Chemical Co., Ltd., Sumitomo Chemical Co., Ltd., Ouchi Shinko Chemical Industrial Co., Ltd., FlexSys Inc., and so forth are used. One of these may be used alone, or two or more may be used in combination. Among them, p-phenylenediamine antioxidants and quinoline antioxidants are preferred.

Further, the wax is not particularly limited, but the examples of the wax are petroleum-based waxes such as paraffin wax and microcrystalline wax; natural waxes such as vegetable waxes and animal waxes; synthetic waxes such as polymers of ethylene, propylene, and the like. As commercially available products, products of Ouchi Shinko Chemical Industrial Co., Ltd., Nippon Seiro Co., Ltd., Seiko Chemical Co., Ltd., and so on are used. One of these may be used alone, or two or more may be used in combination.

For the bead cores 5, a tape bead structure or a single wind structure (not shown) can be appropriately adopted, for example. The tape bead structure and the single-wind structure create high mating pressure with the rim (not shown) and help increase the sense of firmness. In the tape bead structure, the bead core 5 is formed by spirally winding a belt-shaped body from the inside to the outside in the radial direction. The belt-shaped body is formed by an array of bead wires arranged parallel to each other and topped with a rubber or resin material. In the single-wind structure, a single bead wire is continuously wound in a spiral and multi-row, multi-stage configuration to form the bead core 5. Steel cords are suitably used as the bead wires, but organic fiber cords can also be used.

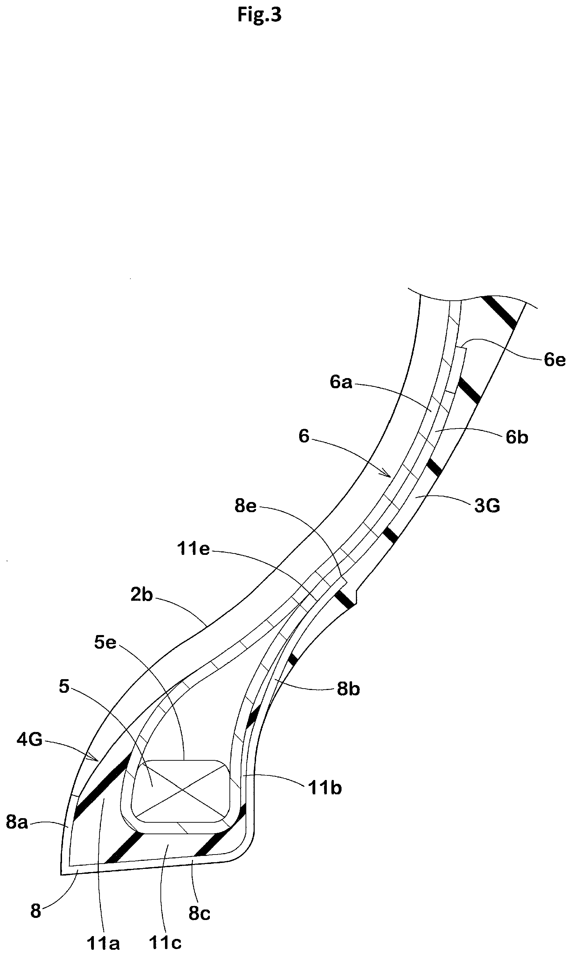

FIG. 3 is an enlarged view of one of the bead portions 4. As shown in FIG. 3, each of the bead portions 4 is provided with a chafer 8 formed by monofilament cords and a clinch rubber 4G adjacent to the chafer 8, for example. The chafer 8 increases the mating pressure with the rim to help maintain the sense of firmness high.

The chafer 8 is arranged axially inside the bead core 5 and includes an inner portion (8a) arranged axially inside the bead core 5 to partially form the tire inner cavity surface (2b), an outer portion (8b) arranged axially outside the turned up portion (6b) of the carcass, and an middle portion (8c) connecting the inner portion (8a) and the outer portion (8b), for example. The outer portion (8b) has an outermost end (8e) in the tire radial direction of the chafer 8, for example. The outer portion (8b) separates the sidewall rubber 3G and the clinch rubber 4G in the present embodiment.

The outermost end (8e) of the chafer 8 is located radially outside the outermost end (5e) of the bead core 5 in the present embodiment. The outermost end (8e) of the chafer 8 is located radially inside the outermost end (6e) of the turned up portion (6b), for example. The outermost end (8e) of the chafer 8 is located within the range T1 in the present embodiment. Thereby, the mating pressure with the rim is maintained high.

The clinch rubber 4G is located between the carcass 6 and the chafer 8, for example. The clinch rubber 4G includes a first portion (11a) arranged between the main body portion (6a) of the carcass 6 and the inner portion (8a), a second portion (11b) arranged between the turned up portion (6b) of the carcass 6 and the outer portion (8b), and a third portion (11c) connecting the first portion (11a) and the second portion (11b). The clinch rubber 4G has an outermost end (11e) in the tire radial direction located in the second portion (11b), for example. The outermost end (11e) of the clinch rubber 4G is located in the range T1 (shown in FIG. 2) in the present embodiment.

While detailed description has been made of an especially preferred embodiment of the present invention, the present invention can be embodied in various forms as claimed.

Motorcycle tires having the basic structure shown in FIG. 1 were made by way of test according to the specification listed in table 1. The test tires were mounted on the front wheel of a motorcycle and a test driver drove the motorcycle. The sense of firmness, the ground contacting feel, and the absorbency during driving were evaluated by the sensory perception of the test driver. The specifications of the rear tires are common. The test results are indicated by an evaluation point based on Reference 1 being 5, wherein a larger number is better. The main common items are as follows.

### < Common Items >

Front tire size: 120/70R17
Front tire inner pressure: 240 kPa
Rear tire size: 200/60R17
Rear tire inner pressure: 160 kPa
Motorcycle: displacement of 1000 cc (4-cycle)

The test results are shown in Table 1.

**Table 1**

| | Ref. 1 | Ref. 2 | Ex. 1 | Ex. 2 | Ex. 3 |
|---|---|---|---|---|---|
| Minimum thickness (Ts)/ Minimum tire thickness (Ta) [%] | 30 | 30 | 30 | 50 | 30 |
| Minimum thickness (Ds) [mm] | 2.0 | 0.1 | 1.0 | 1.0 | 1.0 |
| Position P1 | In Range T1 | In Range T1 | In Range T1 | In Range T1 | In Range T1 |
| Sidewall rubber thickness in Range T1 | 2.0 - 3.0 | 1.0-1.1 | 1.0 - 1.9 | 1.0 - 1.9 | 1.0 - 1.1 |
| Difference (Dm-Ds) [mm] | 1.0 | 1.0 | 0.9 | 0.9 | 0.1 |
| Sense of firmness [evaluation point : larger is better] | 5 | 5 | 5 | 7 | 5 |
| Ground contacting feel [evaluation point : larger is better] | 5 | 7 | 7 | 7 | 10 |
| Absorbency [evaluation point : larger is better] | 5 | 2 | 7 | 7 | 7 |
| Sum total | 15 | 14 | 19 | 21 | 22 |

From the test results, it can be understood that the tires in the Examples show improved sense of firmness, improved ground contacting feel, and improved absorbency compared to the References.

### [ Description of Reference Signs ]

- 1: motorcycle tire
- 2: tread portion
- 2b: tire inner cavity
- 3: sidewall portion
- 3G: sidewall rubber
- 4: bead portion
- 6: carcass
- Ds: minimum thickness
- Ta: minimum tire thickness
- Te: tread edge
- Ts: minimum thickness of sidewall portion

## Claims

1. A motorcycle tire (1) comprising:
a tread portion (2) having a pair of tread edges (Te);
a pair of sidewall portions (3) each extending inward in a tire radial direction from a respective one of the tread edges (Te);
a pair of bead portions (4) each arranged radially inside a respective one of the sidewall portions (3); and
a carcass (6) extending from one bead portion (4) to the other bead portion (4) in a toroidal manner, wherein
each of the sidewall portions (3) has a sidewall rubber (3G) arranged outside the carcass in a tire axial direction,
**characterized in that**
a minimum thickness (Ts) of each of the sidewall portions (3) is 50% or less of a minimum tire thickness (Ta) from a respective one of the tread edges (Te) to a tire inner cavity surface (2b), and
a minimum thickness (Ds) of the sidewall rubber (3G) is from 0.3 to 1.9 mm,
the tread portion (2) includes a tread rubber (2G) forming a ground contacting surface (2a),
each of the sidewall rubber (3G) and the tread rubber (2G) contains an anti-aging agent, and
a blending amount of the anti-aging agent per unit mass of the sidewall rubber (3G) is greater than a blending amount of the anti-aging agent per unit mass of the tread rubber (2G).

2. The motorcycle tire according to claim 1, wherein
each of the bead portions (4) has a bead core (5) embedded therein,
in each axial half of the tire, a first distance (H1) is 60% or less of a second distance (H2),
the first distance (H1) is a distance in the tire radial direction from the bead core (5) to a position (P1) where the sidewall rubber (3G) has the minimum thickness (Ds), and
the second distance (H2) is a distance in the tire radial direction from the bead core (5) to a respective one of the tread edges (Te).

3. The motorcycle tire according to claim 2, wherein the first distance (H1) is 10% or more of the second distance (H1).

4. The motorcycle tire according to claim 2 or 3, wherein a difference (Dm-Ds) between a maximum thickness (Dm) of the sidewall rubber (3G) and the minimum thickness (Ds) of the sidewall rubber (3G) is 1.5 mm or less in a range (T1), radially outward from the bead core (5), of 10% or more and 60% or less of the second distance (H2).

5. The motorcycle tire according to claim 2 or 3, wherein the sidewall rubber (3G) has a thickness of 0.3 mm or more and 1.9 mm or less in a range (T1), radially outward from the bead core (5), of 10% or more and 60% or less of the second distance (H2).

6. The motorcycle tire according to claim 1, wherein
each of the sidewall rubber (3G) and the tread rubber (2G) contains wax, and
a blending amount of the wax per unit mass of the sidewall rubber (3G) is greater than a blending amount of the wax per unit mass of the tread rubber (2G).

7. The motorcycle tire according to claim 2, wherein the bead core (5) has a tape bead structure or a single wind structure.

8. The motorcycle tire according to claim 4, wherein
each of the bead portions (4) is provided with a chafer (8) including monofilament cords, and
the chafer (8) has an outermost end (8e) in the tire radial direction positioned in the range (T1), radially outward from the bead core (5), of 10% or more and 60% or less of the second distance (H2).

## Patentansprüche

1. Motorradreifen (1), umfassend:
einen Laufflächenabschnitt (2) mit einem Paar Laufflächenkanten (Te);
ein Paar Seitenwandabschnitte (3), die sich jeweils in einer Reifenradialrichtung von einer jeweiligen der Laufflächenkanten (Te) nach innen erstrecken;
ein Paar Wulstabschnitte (4), die jeweils radial innen von einem jeweiligen der Seitenwandabschnitte (3) angeordnet sind; und
eine Karkasse (6), die sich in einer toroidalen Weise von einem Wulstabschnitt (4) zu dem anderen Wulstabschnitt (4) erstreckt, wobei
jeder der Seitenwandabschnitte (3) einen Seitenwandkautschuk (3G) aufweist, in einer Reifenaxialrichtung der außen von der Karkasse angeordnet ist,
**dadurch gekennzeichnet, dass**
eine minimale Dicke (Ts) jedes der Seitenwandabschnitte (3) 50 % oder weniger einer minimalen Reifendicke (Ta) von einer jeweiligen der Laufflächenkanten (Te) zu einer Reifeninnenhohlraumfläche (2b) beträgt, und
eine minimale Dicke (Ds) des Seitenwandkautschuks (3G) 0,3 bis 1,9 mm beträgt,
der Laufflächenabschnitt (2) einen Laufflächenkautschuk (2G) umfasst, der eine Bodenkontaktfläche (2a) bildet,
sowohl der Seitenwandkautschuk (3G) als auch der Laufflächenkautschuk (2G) ein Alterungsschutzmittel enthalten, und
eine Mischungsmenge des Alterungsschutzmittels pro Masseneinheit des Seitenwandkautschuks (3G) größer ist als eine Mischungsmenge des Alterungsschutzmittels pro Masseneinheit des Laufflächenkautschuks (2G).

2. Motorradreifen nach Anspruch 1, wobei
jeder der Wulstabschnitte (4) einen darin eingebetteten Wulstkern (5) aufweist,
in jeder axialen Hälfte des Reifens ein erster Abstand (H1) 60 % oder weniger eines zweiten Abstands (H2) beträgt,
der erste Abstand (H1) ein Abstand in der Reifenradialrichtung von dem Wulstkern (5) zu einer Position (P1) ist, an der der Seitenwandkautschuk (3G) die minimale Dicke (Ds) aufweist, und
der zweite Abstand (H2) ein Abstand in der Reifenradialrichtung von dem Wulstkern (5) zu einer jeweiligen der Laufflächenkanten (Te) ist.

3. Motorradreifen nach Anspruch 2, wobei der erste Abstand (H1) 10 % oder mehr des zweiten Abstands (H1) beträgt.

4. Motorradreifen nach Anspruch 2 oder 3, wobei eine Differenz (Dm-Ds) zwischen einer maximalen Dicke (Dm) des Seitenwandkautschuks (3G) und der minimalen Dicke (Ds) des Seitenwandkautschuks (3G) 1,5 mm oder weniger in einem Bereich (T1), radial auswärts von dem Wulstkern (5), von 10 % oder mehr und 60 % oder weniger des zweiten Abstands (H2) beträgt.

5. Motorradreifen nach Anspruch 2 oder 3, wobei der Seitenwandkautschuk (3G) eine Dicke von 0,3 mm oder mehr und 1,9 mm oder weniger in einem Bereich (T1), radial außen von dem Wulstkern (5), von 10 % oder mehr und 60 % oder weniger des zweiten Abstands (H2) aufweist.

6. Motorradreifen nach Anspruch 1, wobei
sowohl der Seitenwandkautschuk (3G) als auch der Laufflächenkautschuk (2G) Wachs enthalten, und
eine Mischungsmenge des Wachses pro Masseneinheit des Seitenwandkautschuks (3G) größer ist als eine Mischungsmenge des Wachses pro Masseneinheit des Laufflächenkautschuks (2G).

7. Motorradreifen nach Anspruch 2, wobei der Wulstkern (5) eine Bandwulststruktur oder eine Einzelwindungsstruktur aufweist.

8. Motorradreifen nach Anspruch 4, wobei
jeder der Wulstabschnitte (4) mit einem Wulstschutzband (8) versehen ist, das Monofilamentkorde umfasst, und
das Wulstschutzband (8) ein äußerstes Ende (8e) in der Reifenradialrichtung aufweist, das in dem Bereich (T1), radial außen von dem Wulstkern (5), von 10 % oder mehr und 60 % oder weniger des zweiten Abstands (H2) positioniert ist.

## Revendications

1. Pneumatique pour motocyclette (1) comprenant :
une portion formant bande de roulement (2) ayant une paire de bords de bande de roulement (Te) ;
une paire de portions formant parois latérales (3) s'étendant chacune vers l'intérieur dans une direction radiale du pneumatique depuis un bord respectif des bords de bande de roulement (Te) ;
une paire de portions de talon (4) agencées chacune radialement à l'intérieur d'une portion respective des portions formant parois latérales (3) ; et
une carcasse (6) s'étendant depuis une portion de talon (4) jusqu'à l'autre portion de talon (4) d'une manière toroïdale, dans lequel chacune des portions formant parois latérales (3) a un caoutchouc de paroi latérale (3G) agencé à l'extérieur de la carcasse dans une direction axiale du pneumatique,
**caractérisé en ce que**
une épaisseur minimum (Ts) de chacune des portions formant parois latérales (3) est de 50 % ou moins d'une épaisseur de pneumatique minimum (Ta) depuis un bord respectif des bords de bande de roulement (Te) jusqu'à une surface de cavité intérieure de pneumatique (2b), et
une épaisseur minimum (Ds) du caoutchouc de paroi latérale (3G) est de 0,3 à 1,9 mm,
la portion formant bande de roulement (2) inclut un caoutchouc de bande de roulement (2G) formant une surface de contact au sol (2a),
chacun du caoutchouc de paroi latérale (3G) et du caoutchouc de bande de roulement (2G) contient un agent anti-vieillissement, et
une quantité de mélange de l'agent anti-vieillissement par masse unitaire du caoutchouc de paroi latérale (3G) est supérieure à une quantité de mélange de l'agent anti-vieillissement par masse unitaire du caoutchouc de bande de roulement (2G).

2. Pneumatique pour motocyclette selon la revendication 1, dans lequel chacune des portions de talon (4) a une âme de talon (5) enchâssée à l'intérieur de celle-ci,
dans chaque moitié axiale du pneumatique, une première distance (H1) est de 60 % ou moins d'une seconde distance (H2),
la première distance (H1) est une distance dans la direction radiale du pneumatique depuis l'âme de talon (5) jusqu'à une position (P1) où le caoutchouc de paroi latérale (3G) a l'épaisseur minimum (Ds), et
la seconde distance (H2) est une distance dans la direction radiale du pneumatique depuis l'âme de talon (5) jusqu'à un bord respectif des bords de bande de roulement (Te).

3. Pneumatique pour motocyclette selon la revendication 2, dans lequel la première distance (H1) est de 10 % ou plus de la seconde distance (H2).

4. Pneumatique pour motocyclette selon la revendication 2 ou 3, dans lequel une différence (Dm-Ds) entre une épaisseur maximum (Dm) du caoutchouc de paroi latérale (3G) et l'épaisseur minimum (Ds) du caoutchouc de paroi latérale (3G) est de 1,5 mm ou moins dans une plage (T1), radialement à l'extérieur de l'âme de talon (5), de 10 % ou plus et de 60 % ou moins de la seconde distance (H2).

5. Pneumatique pour motocyclette selon la revendication 2 ou 3, dans lequel le caoutchouc de paroi latérale (3G) a une épaisseur de 0,3 mm ou plus et de 1,9 mm ou moins dans une plage (T1), radialement à l'extérieur de l'âme de talon (5), de 10 % ou plus et de 60 % ou moins de la seconde distance (H2).

6. Pneumatique pour motocyclette selon la revendication 1, dans lequel
chacun du caoutchouc de paroi latérale (3G) et du caoutchouc de bande de roulement (2G) contient de la cire, et
une quantité de mélange de la cire par masse unitaire du caoutchouc de paroi latérale (3G) est supérieure à une quantité de mélange de la cire par masse unitaire du caoutchouc de bande de roulement (2G).

7. Pneumatique pour motocyclette selon la revendication 2, dans lequel l'âme de talon (5) a une structure de talon à ruban ou une structure à enroulement unique.

8. Pneumatique pour motocyclette selon la revendication 4, dans lequel
chacune des portions de talon (4) est dotée d'une bandelette de talon (8) incluant des câblés monofilament, et
la bandelette de talon (8) a une extrémité la plus extérieure (8e) dans la direction radiale du pneumatique positionnée dans la plage (T1), radialement à l'extérieur de l'âme de talon (5), de 10 % ou plus et de 60 % ou moins de la seconde distance (H2).
